Europäisches Patentamt

European Patent Office

Office européen des brevets

(19)

(11) **EP 1 157 044 B1**

(12) **EUROPÄISCHE PATENTSCHRIFT**

(45) Veröffentlichungstag und Bekanntmachung des Hinweises auf die Patenterteilung:
**21.04.2004 Patentblatt 2004/17**

(21) Anmeldenummer: **99967962.4**

(22) Anmeldetag: **20.12.1999**

(51) Int Cl.$^7$: **C08B 31/06**

(86) Internationale Anmeldenummer:
**PCT/EP1999/010134**

(87) Internationale Veröffentlichungsnummer:
**WO 2000/037505 (29.06.2000 Gazette 2000/26)**

(54) **STÄRKE-PHOSPHATE, VERFAHREN ZU DEREN HERSTELLUNG SOWIE DEREN VERWENDUNG**

STARCH PHOSPHATES, METHOD FOR THE PRODUCTION THEREOF AND THEIR USE

PHOSPHATES D'AMIDON, LEUR PROCEDE DE PRODUCTION ET LEUR UTILISATION

(84) Benannte Vertragsstaaten:
**AT BE CH CY DE DK ES FI FR GB GR IE IT LI LU MC NL PT SE**

(30) Priorität: **21.12.1998 DE 19859123**

(43) Veröffentlichungstag der Anmeldung:
**28.11.2001 Patentblatt 2001/48**

(73) Patentinhaber: **Eisu Innovative Gesellschaft für Technik und Umweltschutz mbH
06766 Wolfen (DE)**

(72) Erfinder:
• **PIESCHEL, Friedemann
D-06766 Wolfen (DE)**
• **LANGE, Eckehard
D-06846 Dessau (DE)**
• **CAMACHO, Juan
D-06766 Wolfen (DE)**

(74) Vertreter: **Tragsdorf, Bodo, Dipl.-Ing.
Patentanwalt
Heinrich-Heine-Strasse 3
06844 Dessau (DE)**

(56) Entgegenhaltungen:
**BE-A- 618 620            ES-A- 8 401 769
GB-A- 968 427            US-A- 4 083 904**

• **WALY A ET AL: "SYNTHESIS AND PROPERTIES OF STARCH PHOSPHATE MONOESTERS" STARCH STARKE,DE,WILEY-VCH VERLAG, WEINHEIM, Bd. 46, Nr. 2, 1. Februar 1994 (1994-02-01), Seiten 59-63, XP000423601 ISSN: 0038-9056**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft Stärke-phosphate mit verbesserten anwendungstechnischen Eigenschaften, ein Verfahren zu deren Herstellung sowie deren Verwendung. Stärke-phosphate sind Stärke-Derivate, in denen zumindest einige der verfügbaren Hydroxy-Gruppen des Polysaccharids mit oder ohne dessen Vernetzung durch Phosphatestergruppen verestert sind. Abhängig vom eingesetzten Phosphorylierungsmittel und den Reaktionsbedingungen werden unvernetzte Monoester und vernetzte Diester der Stärke erhalten. Technische Bedeutung haben bisher nur Stärke-phosphate mit niedrigen Substitutionsgraden erlangt.

In der GB-A-968427 ist die Reaktion von Maisstärke mit 0,135 Mol $NaH_2PO_4$ und 0,27 Mol Harnstoff, jeweils pro Äquivalent Anhydroglucose, bei einem Vakuum von 77,9 kPa und einer Temperatur von bis zu 138 °C während einer Zeitdauer von 3 Stunden beschrieben. Dabei wird als Ausgangsmaterial eine wasserhaltige Suspension mit 45 % Stärke eingesetzt, die nach der Zugabe der beiden anderen Reaktionskomponenten vor der thermischen Behandlung filtriert wird, wobei erhebliche Mengen an Harnstoff und Phosphat mit abgetrennt werden. Dadurch bedingt wird nur ein Stärkephosphat mit niedrigen Substitutionsgraden der Carbamidgruppen und der Phosphatestergruppen erhalten.

In der Literatur, A. Waly et al., Starch/Stärke, 46 (1994) Nr. 2, S. 59 bis 63, ist u.a. die Reaktion von 50 g Stärke mit 5g $H_3PO_4$ und 2 g Harnstoff bei einer Temperatur von 155 °C und einer Zeitdauer von 2 Stunden beschrieben. Aufgrund der geringen Einsatzmenge an Harnstoff dient dieser lediglich als Kondensationsmittel bei der Umsetzung, so daß es zu keiner oder nur einer sehr geringen Carbamidgruppenbildung kommen kann.

In der ES-A-8401769 ist eine Reaktion von 65 g Stärke mit 25 g Harnstoff und 10 g Phosphorsäure bei 150 °C während 45 min beschrieben. Infolge der relativ hohen Anteile an Harnstoff und Phosphorsäure entsteht ein Stärkepolyphosphat, da die Reaktion bei einer hohen Temperatur und ohne Vakuum durchgeführt wird. Bei Stärkepolyphosphaten handelt es sich um unlösliche und wenig quellfähige Produkte. Aus der Literatur (Houben-Weyl (1987), Bd. 20/3, Seite 2164) ist auch bekannt, daß durch den Zusatz organischer Stickstoffverbindungen, wie z.B. Harnstoff, die Veresterungsreaktion zur Bildung der Stärke-phosphate günstig beeinflußt werden kann. In dem angegebenen Beispiel beträgt die Einsatzmenge an Harnstoff lediglich 4 %, bezogen auf die Ausgangsmenge von Kartoffelstärke. Das Gemisch, bestehend aus der Stärke, dem Phosphorylierungsmittel und Harnstoff, wird 3 Stunden lang auf 95°C erhitzt, um das Wasser zu entfernen und anschließend bei 150 °C 3,5 Stunden getempert, jeweils bei vermindertem Druck unterhalb von 7,5 kPa. Ausgehend von den Gehalten an Phosphor von 0,31 Gew.-% und Stickstoff von 0,08 Gew.-% liegt der durchschnittlich erzielte Substitutionsgrad für die Phosphatestergruppen unter 0,02. Die niedrige Einsatzmenge an Harnstoff dient ausschließlich zur Unterstützung der Kondensationsreaktion. Das nach dem Abkühlen erhaltene Stärke-phosphat ist innerhalb weniger Sekunden wasserlöslich.

Bekannt ist auch (Starch 43 (1991), Nr. 2, S. 66-69), daß hochphosphorylierte Stärken mit Substitutionsgraden von ca. 1 den generellen Nachteil haben, daß sie leicht in feuchter Luft hydrolysieren. Die Kleister dieser Stärke haben zudem eine geringere Viskosität als die Ausgangsstärke.

Außerdem erfordert deren Herstellung den Einsatz besonders aggressiver Phosphorylierungsmittel, wie Phosphoroxychlorid, Phosphorpentoxid und organischen Lösungsmitteln, wobei die Gefahr von massiver Bildung von Di- und Tristärkephosphatgruppen besteht (Houben-Weyl (1987) Bd. 20/3, S. 2164). Mit weniger aggressiven Phosphorylierungsmitteln, wie z.B. Natriumphosphat, werden dagegen nur niedrige Substitutionsgrade der Stärke erzielt.

Der Erfindung liegt die Aufgabe zugrunde, Stärke-phosphate zu schaffen, die einen hohen Substitutionsgrad aufweisen, hydrolysebeständig sind und mittels Phosporylierungsmitteln herstellbar sind, die nur eine geringe Toxizität besitzen. Außerdem soll ein geeignetes Verfahren zur Herstellung dieser Stärke-phosphate geschaffen werden.

Erfindungsgemäß wird die Aufgabe durch die im Anspruch 1 angegebenen Merkmale gelöst. Die zur Durchführung des Verfahrens notwendigen Merkmale sind im Anspruch 6 angegeben. Geeignete Ausgestaltungsvarianten zu den Stärke-phosphaten sowie deren Herstellung sind in den Ansprüchen 2 bis 5 und 7 bis 12 angegeben. Besondere Verwendungen der erfindungsgemäßen Stärke-phosphate sind Gegenstand der Ansprüche 13 bis 15.

Durch eine kombinierte Phosphorylierung und Carbamidierung der Ausgangsstärke unter Verwendung von nichttoxischen Phosphorylierungsmitteln, die ansonsten nur zur Herstellung niedrigsubstituierter Stärke-phosphate eingesetzt werden, ist es gelungen, hochsubstituierte Stärke-phosphate zu erhalten, die unter normalen Bedingungen hydrolysebeständig sind und hervorragende anwendungstechnische Eigenschaften besitzen. Durch Variation der Einsatzmengen der Phosphorylierungsmittel sowie des Harnstoffes und/oder der Reaktionszeiten lassen sich Stärke-phosphate mit unterschiedlichen Substitutionsgraden im Bereich von 0,1 bis 1, sowohl der Carbamidgruppen als auch der Phosphatestergruppen herstellen. Als Stärke oder stärkehaltiges Material sind sowohl reines Amylopektin als auch reine Amylose sowie deren native Gemische geeignet. Auch stärkereiche Gemische, wie Mehle der verschiedenen Getreidearten, können ebenso eingesetzt werden wie deren gereinigte Stärkeprodukte sowie Erbsen- und Kartoffelstärken. Weiterhin sind als Stärken geringfügig im Molekulargewicht reduzierte Stärken, sogenannte dünnlösende Stärken geeignet, wie sie durch eine vorsichtige Säurebehandlung gewonnen werden, nicht aber Dextrine, die durch einen starken Säureabbau von Stärken erzeugt werden. Auch die sogenannten löslichen Stärken, d.h. kaltwasserlösliche Stärken, die durch Temperaturbehandlung von Stärken erzeugt werden, können als Ausgangsstoffe verwendet werden.

An den einzusetzenden Harnstoff werden keine besonderen Anforderungen gestellt, jede beliebige technische Harnstoffqualität ist geeignet. Als Phosphorylierungsmittel kann Phosphorsäure beliebiger technischer Qualität eingesetzt werden, wobei die handelsübliche 85 %ige besonders geeignet ist. Beim Einsatz stärker verdünnter Säuren muß lediglich mehr Wasser vor der Umsetzung verdampft werden. Anstelle von Phosphorsäure können auch Ammoniumphosphate, Kaliumphosphate oder Natriumphosphate sowie Gemische dieser Phosphate eingesetzt werden. Der Einsatz dieser Phosphate erfordert im Vergleich zu Phosphorsäure um 10 bis 15°C höhere Umsetzungstemperaturen, führt aber zu dem Vorteil, daß wegen des niedrigeren Gehaltes an $H^+$-Ionen weniger Stärkeabbauprodukte gebildet werden.

Die Umsetzung erfolgt unter vermindertem Druck von unter 13,3 kPa. Die Durchführung der Carbamidierungs- und Phosphorylierungsreaktion im Vakuum verläuft besonders schonend und findet bei deutlich niedrigeren Temperaturen statt als unter Normaldruck.

Ausgehend von den gewünschten anwendungstechnischen Eigenschaften der Stärke-phosphate liegen die Substitutionsgrade der Carbamidgruppen und der Phosphatestergruppen in einem Bereich von 0,1 bis 1, da Stärke-phosphate mit einem DS der Carbamidgruppen (DSC) von kleiner als 0,1 nicht lagerstabil sind und Stärke-phosphate mit einem DS der Phosphatestergruppen (DSP) von kleiner als 0,1 nur unzureichend quellbar oder kaltwasserlöslich sind. Stärke-phosphate mit einem DSC bzw. DSP von größer als 1 sind biologisch schlecht abbaubar.

Ein weiterer wesentlicher Vorteil der erfindungsgemäßen Verfahrensweise besteht darin, daß durch eine Umsetzung bei jeweils unterschiedlichen Reaktionstemperaturen in ihren Eigenschaften unterschiedliche Stärke-phosphate erhalten werden. Reaktionstemperaturen bis zu 110 °C ergeben Stärke-phosphate, die zu homogenen Lösungen verarbeitet werden können. Bei Reaktionstemperaturen oberhalb von 120 °C werden Stärke-phoshate erhalten, die zu Suspensionen von gequollenen Partikeln mit einem hohen Wasserrückhaltevermögen verarbeitet werden können und in ihren Eigenschaften den bekannten Superabsorbern ähnlich sind.

Die nach der erfindungsgemäßen Verfahrensweise hergestellten Stärke-phosphate sind völlig unbrennbar und biologisch abbaubar. Die relativ hohen Substitutionsgrade der Phosphatester- und Carbamidgruppen wirken sich anscheinend nicht nachteilig auf den mikrobiellen Abbau aus.

Die in Wasser homogen löslichen Stärke-phosphate sind besonders für einen Einsatz als Klebstoffkomponente und zur Viskositätsregulierung von wäßrigen Systemen geeignet. Die hohe Konzentration an ionogenen Gruppen wirkt sich sehr vorteilhaft auf die Dispergierbarkeit von Feststoffpartikeln aus.

Die in Wasser nur quellenden Stärke-phosphate können wie die bekannten Superabsorber als Verdickungsmittel, Löschwasserzusatz und aufgrund ihrer hohen Saugfähigkeit als Zusatz oder alleiniger Bestandteil, insbesondere von Hygieneartikeln, eingesetzt werden.

Infolge der guten biologischen Abbaubarkeit der erfindungsgemäßen Stärke-phosphate weisen die aus diesen hergestellten Produkte im Vergleich zu Polyacrylatprodukten erhebliche Vorzüge auf.

Stärke-phosphate, die Gele bilden, besitzen die Eigenschaft, Kationen auszutauschen, und sofern sie sich homogen lösen, sind sie in der Lage, Komplexe zu bilden. Dabei werden mehrwertige Metallionen, insbesondere Schwermetallionen, aber auch Härtebildner, sehr fest gebunden. Die gelbildenden Produkte sind deshalb besonders gut zur Bindung von schwermetallhaltigen Lösungen geeignet, da die Schwermetalle im Gel fixiert bleiben und z.B. durch Regen oder dgl. nicht ausgewaschen werden. Gele und klar lösliche Produkte können zur Enthärtung von Wasser eingesetzt werden, z.B. als Waschmittelzusatz. Die dadurch in das Abwasser gelangenden Phosphatmengen sind bedeutend geringer als bei einem Einsatz von Polyphosphaten als Wasserenthärter.

Beispiel 1

111,1 g Maisstärke mit einem Stärkegehalt von 90 % und einem $H_2O$-Gehalt von 10 % (Hylon VII der Fa. National Starch & Chem. GbmH) werden mit 22 ml Wasser vermischt. Anschließend werden unter ständigem Rühren 42,2 g 85 %iger Phosphorsäure und 55,6 g Harnstoff zugegeben. Die Molverhältnisse der Anhydroglucoseeinheiten (AGU) der Stärke : Phosphor: Harnstoff betragen 1 : 0,59 : 1,48.

Das entstandene breiige Gemisch wird bei einer Temperatur von 90 °C und unter Anlegen eines Vakuums von 3,3 bis 4,6 kPa getrocknet. Danach wird das Gemisch auf die erforderlichen Reaktionstemperaturen in einem Reaktionsbehälter unter Aufrechterhaltung des Vakuums auf eine Temperatur von 130 bis 140 °C erhitzt, während einer Reaktionsdauer von 2 Stunden. Es entsteht ein teigiges Produkt, das durch Abkühlen erstarrt und anschließend zerkleinert wird. Dieses wird durch mehrfaches Anschlämmen mit einem Methanol-Wassergemisch (Volumenverhältnis 3 : 1) und nachfolgendes Absaugen gereinigt. Durch abschließendes Trocknen im Vakuumtrockenschrank bei 30 bis 50 °C werden 122,2 g eines mehligen Stärkephosphates mit einem Phosphorgehalt von 6,6 % und einem Stickstoffgehalt von 2,2 % erhalten. Die Substitutionsgrade DSP für Phosphatestergruppen betragen 0,48 und die für Carbamidgruppen DSC 0,35.

Beispiele 2 bis 16

Analog wie im Beispiel 1 werden ausgehend von unterschiedlichen Stärken Stärke-phosphate hergestellt. Die Einsatzmengen der Ausgangsprodukte und die Verfahrensparameter sind in den nachfolgenden Tabellen angegeben.

Tabelle 1:

| Ausgangsstärken | | | | |
|---|---|---|---|---|
| Beispiel Nr. | Stärke | | | |
| | Art | | Stärkegehalt | $H_2O$-Gehalt |
| | | Menge in g | % | % |
| 2 | Weizenstärke | 112,4 | 89 | 11 |
| 3 | Maisstärke | 111,1 | 90 | 10 |
| 4 | Kartoffelstärke | 116,3 | 86 | 14 |
| 5 | Weizenmehl | 112,0 | 82 | 13 |
| 6 | kaltwasserlösliche Stärke | 113,6 | 88 | 12 |
| 7 | Weizenmehlhydrolysat (dünnlösende Stärke) | 120,5 | 83 | 12 |
| 8 bis 16 | Weizenmehl | 112,0 | 82 | 13 |

Tabelle 2:

| $H_2O$-Zugabe, Phosphorylierungsmittel, Harnstoff und Molverhältnisse | | | | | |
|---|---|---|---|---|---|
| Beispiel Nr. | $H_2O$-Zugabe g | Phosphorylierungsmittel | | | Molverhältnisse |
| | | Art | Menge g | Harnstoff g | AGU : P : Harnstoff |
| 2 | 25 | $H_3PO_4$ 85 %ig | 71,1 | 148,1 | 1 : 1 : 4 |
| 3 | | | 106,7 | 166,6 | 1 : 1,5 : 4 |
| 4 | | | 42,7 | 77,8 | 1 : 0,6 : 2,1 |
| 5 | | | 71,1 | 111,1 | 1 : 1 : 3 |
| 6 | | | 71,1 | 111,1 | 1 : 1 : 3 |
| 7 | | | 71,1 | 111,1 | 1 : 1 : 3 |
| 8 | 30 | $(NH_4)_2HPO_4$ | 65,2 | 88,9 | 1 : 0,8 : 2,4 |
| 9 | 30 | $NH_4H_2PO_4$ | 28,4 | 44,4 | 1 : 0,4 : 1,2 |
| 10 | 20 | $KH_2PO_4$ | 25,2 | 27,8 | 1 : 0,3 : 0,75 |
| 11 | 40 | $NaH_2PO_4 \cdot H_2O$ | 17,0 | 148,1 | 1 : 0,2 : 4 |
| 12 | 50 | $H_3PO_4$ 85 %ig | 7,1 | 13,0 | 1 : 0,1 : 0,35 |
| 13 | 30 | | 71,1 | 74,1 | 1 : 1 : 2,0 |
| 14 | 22 | $H_3PO_4$ 85 %ig | 62,8 | 114,4 | 1 : 0,88 : 3,1 |
| 15 | 16 | | 47,0 | 85,8 | 1 0,66 : 2,3 |
| 16 | 11 | | 30,9 | 57,3 | 1 : 0,43 : 1,55 |

Tabelle 3:

| Verfahrensparameter und Ergebnisse | | | | | | | |
|---|---|---|---|---|---|---|---|
| Beispiel Nr. | Reaktionsbedingungen | | | Gehalt | | Substitutionsgrade | |
| | Vakuum kPa | Temperatur °C | Dauer min | P % | N % | DSP | DSC |
| 2 | 3,3-4,7 | 125 | | 8,9 | 4,6 | 0,82 | 0,93 |
| 3 | 4 | 135 | | 10,2 | 4,1 | 0,99 | 0,89 |
| 4 | 5,3 | 130 | 120 | 7,0 | 2,5 | 0,52 | 0,41 |
| 5 | 12-12,7 | 140 | | 9,1 | 4,6 | 0,85 | 0,95 |
| 6 | 5,3 | 125 | 90 | 8,5 | 3,2 | 0,71 | 0,60 |
| 7 | 4 | 122 | 90 | 8,4 | 2,9 | 0,69 | 0,52 |
| 8 | 4,7 | 140 | 60 | 6,5 | 3,7 | 0,50 | 0,63 |
| 9 | 2,7 | 140 | 120 | 7,4 | 3,9 | 0,61 | 0,71 |
| 10 | 2,7 | 135 | 120 | 3,3 | 2,5 | 0,21 | 0,35 |
| 11 | 2 | 140 | 180 | 2,1 | 6,3 | 0,15 | 0,98 |
| 12 | 1,3 | 135 | 90 | 1,7 | 0,95 | 0,10 | 0,12 |
| 13 | 2 | 140 | 180 | 9,8 | 0,84 | 0,79 | 0,15 |
| 14 | | 100 | | 8,0 | 1,0 | 0,59 | 0,17 |
| 15 | 2,7 - 4 | 110 | 180 | 6,9 | 0,78 | 0,48 | 0,12 |
| 16 | | 110 | | 5,8 | 1,0 | 0,39 | 0.15 |

Bei der Synthese nach der erfindungsgemäß vorgeschlagenen Verfahrensweise fallen die erhaltenen Stärke-phosphate als Ammoniumsalze der Phosphatester an. Damit bei der Elementaranalyse nur der in den Carbamidgruppen gebundene Stickstoff erfaßt wird, wurden die Ammoniumsalze wie folgt in die entsprechenden Natriumsalze überführt. Jeweils eine Probe der erhaltenen, gereinigten Stärke-phosphate wurde mit einem geringen Überschuß an Natriumbicarbonat versetzt und mit Wasser bis zur Bildung einer Suspension verrührt. Das jeweilige Gemisch wurde im Vakuumrotationsverdampfer bis zur völligen Trockenheit eingedampft und anschließend mit Wasser versetzt und erneut eingedampft, solange bis das Destillat frei von $NH_4^+$ war. Der Rückstand wurde mit Wasser angerührt, mit Eisessig bis pH ca. 6 versetzt und das Produkt mit dem 3-fachen Volumen Methanol gefällt. Abschließend wurde abgesaugt, mit Methanol-Wasser-Gemisch im Verhältnis 3 : 1 gewaschen und bei einer Temperatur von 100 °C im Vakuumtrockenschrank getrocknet. An der in der $Na^+$-Form vorliegenden Probe wurden Elementaranalysen nach der praxisüblichen Methode ausgeführt.

Die gemäß den Beispielen 1 bis 16 erhaltenen Stärke-phosphate werden hinsichtlich ihres Verhaltens im Wasser untersucht und das Wasserrückhaltevermögen bei den in der Gel-Form erhaltenen Stärke-phosphaten bestimmt.

Bei den als homogene Lösung angefallenen Stärke-phosphaten wird die Viskosität als 2,5 %ige Lösung mittels eines Rotationsviskosimeters ermittelt.

Die Bestimmung des Wasserrückehaltevermögens erfolgt nach folgender Methode: Eine Probe wird mit einem Überschuß Wasser übergossen und nach 30 minütigem Quellen durch Zentrifugieren mit einem Glasfiltertiegel bei ca. 3000 G vom Wasserüberschuß befreit. Anschließend wird die Probe in einem Vakuumtrockenschrank bei 100 °C wieder entwässert. Das WRHV in % ergibt sich nach

WRHV = (Masse Probe naß - Masse Probe trocken) · 100/Masse Probe trocken

Die Ergebnisse des Verhaltens in Wasser, der Untersuchungen zum WRHV und der Viskosität sind in der abschließenden Tabelle 4 angegeben.

Weiterhin wird an Proben der gemäß den Beispielen 5, 10, 12 und 13 erhaltenen Stärke-phosphate die biologische Abbaubarkeit nach folgender Methode getestet: Die Untersuchung wird in Anlehnung an die Empfehlung des DECHEMA-Arbeitskreises "Umweltbiotechnolgie-Boden" zur Überprüfung des mikrobiellen Schadstoffbaus im Boden durchgeführt.

1. Isolation der autochthonen Mikroorganismen

10 g frischer Kompost werden in 100 ml 0,9 %iger NaCl-Lösung 30 Minuten bei 20 °C und 150 U/min inkubiert. Nach dem Absetzen der Bodenpartikel wird die überstehende Flüssigkeit dekantiert und als Mikroorganismensuspension verwendet.

2. Abbauuntersuchung

1 g Probe werden mit 100 ml unverdünnter bzw. 100 ml 1 : 10 verdünnter Mikroorganismensuspension aufgeschüttelt und in dicht verschließbaren Gefäßen bei 20 °C als Standkultur inkubiert. Die Abnahme des Gelvolumens wird nach einer Zeitdauer von 14 Tagen gemessen.

Die Ergebnisse sind in der abschließenden Tabelle 4 angegeben:

Tabelle 4:

| Untersuchungsergebnisse an Proben qemäß den Beispielen 1 bis 16 | | | | | |
|---|---|---|---|---|---|
| Beispiel Nr. | Verhalten im Wasser | WRHV % | Viskosität mPas | Abnahme Gelvolumen % | |
| 1 | Gelbildung | 6000 | | | |
| 2 | Gelbildung | 6070 | | | |
| 3 | Gelbildung | 1274 | | | |
| 4 | Gelbildung | 2530 | | | |
| 5 | Gelbildung | 1360 | | 100 | 30 |
| 6 | Gelbildung | 4800 | | | |
| 7 | Gelbildung | 5620 | | | |
| 8 | Gelbildung | 3280 | | | |
| 9 | Gelbildung | 3450 | | | |
| 10 | Gelbildung | 2810 | | 90 | 10 |
| 11 | Gelbildung | 4760 | | | |
| 12 | Gelbildung | 1800 | | 100 | 40 |
| 13 | Gelbildung | 2300 | | 100 | 30 |
| 14 | homogene Lösung | | 44 | | |
| 15 | homogene Lösung | | 38 | | |
| 16 | homogene Lösung | | 23 | | |

**Patentansprüche**

1.   Stärke-phosphate, erhalten durch Umsetzung von Stärke oder stärkehaltigen Materialien mit einem Phosphorylierungsmittel und Harnstoff, **dadurch gekennzeichnet, daß** die Anhydroglucoseeinheiten durch Phosphatestergruppen und Carbamidgruppen substituiert sind und der durchschnittliche Substitutionsgrad DS der Carbamidgruppen und der Phosphatestergruppen jeweils in einem Bereich von 0,1 bis 1 liegt.

2.   Stärke-phosphate nach Anspruch 1, **dadurch gekennzeichnet, daß** die Ausgangsstärken reines Amylopektin oder reine Amylose oder deren native Gemische oder Erbsen-, Kartoffel- oder Getreidestärken sowie dünnlösende oder kaltwasserlösliche Stärken sind.

3.   Stärke-phosphate nach einem der Ansprüche 1 oder 2, **dadurch gekennzeichnet, daß** das Phosphorylierungsmittel Phosphorsäure und/oder Ammoniumphosphat und/oder Kaliumphosphat und/oder Natriumphosphat ist.

4.   Stärke-phosphate nach einem der Ansprüche 1 bis 3, **dadurch gekennzeichnet, daß** das Carbamidierungsmittel Harnstoff ist.

**5.** Stärke-phosphate nach einem der Ansprüche 1 bis 4, **dadurch gekennzeichnet, daß** die Molverhältnisse der Anhydroglucoseeinheiten der Ausgangsstärke : Phosphor des Phosphorylierungsmittels : Harnstoff 1 : 0,1 bis 1,5 : 0,3 bis 4 betragen.

**6.** Verfahren zur Herstellung von Stärke-phosphaten nach einem der Ansprüche 1 bis 5 durch die Umsetzung von Stärke oder stärkehaltigen Ausgangsmaterialien mit einem Phosphorylierungsmittel und unter Zugabe von Harnstoff, **dadurch gekennzeichnet, daß** die Ausgangsstoffe in einem Molverhältnis Anhydroglucoseeinheiten der Stärke : Phosphor des Phosphorylierungsmittels : Harnstoff von 1 : 0,1 bis 1,5 : 0,3 bis 4 eingesetzt werden, die Umsetzung unter Vakuum bei einem Druck von $\leq$ 13,3 kPa und Reaktionstemperaturen von 90 °C bis 140 °C durchgeführt wird, wobei während der Umsetzung die Anhydroglucoseeinheiten der Ausgangsstärke durch Phosphatester- und Carbamidgruppen bis zu durchschnittlichen Substitutionsgraden DS von jeweils 0,1 bis 1 substituiert werden.

**7.** Verfahren nach Anspruch 6, **dadurch gekennzeichnet, daß** durch Variation der Einsatzmengen an Harnstoff und/oder Phosphorylierungsmittel und/oder der Reaktionszeiten die Substitutionsgrade (DS-Werte) der Carbamidierung und Phosphorylierung eingestellt werden, wobei Stärke-phosphate erhalten werden, die in Wasser Gele bilden oder homogen löslich sind.

**8.** Verfahren nach einem der Ansprüche 6 oder 7, **dadurch gekennzeichnet, daß** die Reaktionsdauer 60 min bis 180 min beträgt.

**9.** Verfahren nach einem der Ansprüche 6 bis 8, **dadurch gekennzeichnet, daß** die Ausgangsstärke vor der Umsetzung mit Wasser vermischt wird und anschließend unter ständigem Mischen die Einsatzmengen an Harnstoff und Phosphorylierungsmittel zugesetzt werden, das breiige Gemisch zur Entfernung des Wassers erhitzt und getrocknet wird.

**10.** Verfahren nach Anspruch 9, **dadurch gekennzeichnet, daß** die Trocknung unter Vakuum durchgeführt wird.

**11.** Verfahren nach einem der Ansprüche 9 oder 10, **dadurch gekennzeichnet, daß** die Trocknung bei Temperaturen von bis zu 90 °C durchgeführt wird.

**12.** Verfahren nach einem der Ansprüche 6 bis 11, **dadurch gekennzeichnet, daß** ein Vakuum mit einem Druck von bis zu 6,7 kPa angelegt wird.

**13.** Verwendung von Stärke-phosphaten nach einem der vorhergehenden Ansprüche als Superabsorber.

**14.** Verwendung von Stärke-phosphaten nach einem der vorhergehenden Ansprüche als Klebstoffkomponente oder Viskositätsregler für wäßrige Systeme.

**15.** Verwendung von Stärke-phosphaten nach einem der vorhergehenden Ansprüche als Löschwasserzusatzmittel.

**Claims**

**1.** Starch phosphates obtained by reacting starch or starch-containing materials with a phosphorylating agent and urea, **characterized in that** the anhydroglucose units are substituted by phosphate ester groups and carbamide groups and the average degree of substitution DS of the carbamide groups and the phosphate ester groups is in each case in a range from 0,1 to 1.

**2.** Starch phosphates according to claim 1, **characterized in that** the starting starches are pure amylopectin or pure amylose or their native mixtures, or pea, potato or grain starches as well as thin-dissolving or cold water soluble starches.

**3.** Starch phosphates according to any one of claims 1 or 2, **characterized in that** the phosphorylating agent is phosphoric acid and/or ammonium phosphate and/or potassium phosphate and/or sodium phosphate.

**4.** Starch phosphates according to any one of claims 1 to 3, **characterized in that** the carbamidating agent is urea.

5. Starch phosphates according to any one of claims 1 to 4, **characterized in that** the molar ratios of the anhydroglucose units of the starting starch : phosphorus of the phosphorylating agent : urea are 1 : 0,1 to 1,5 : 0,3 to 4.

6. A method for producing starch phosphates according to any one of claims 1 to 5, by reacting starch or starch-containing starting materials with a phosphorylating agent with addition of urea, **characterized in that** the starting materials are used with a molar ratio of the anhydroglucose units of the starch : phosphorus of the phosphorylating agent : urea of 1 : 0,1 to 1,5 : 0,3 to 4; and that the reaction is carried out under vacuum at a pressure of $\leq$ 13,3 kPa and at reaction temperatures of from 90 °C to 140 °C, whereby the anhydroglucose units of the starting starch are substituted in the course of the reaction by phosphate ester groups and carbamide groups up to an average degree of substitution DS of 0,1 to 1 in each case.

7. The method according to claim 6, **characterized in that** the degrees of substitution (DS-values) of the carbamidation and phosphorylation are adjusted by varying the amounts of urea and/or of the phosphorylating agent used, and/or of the reaction times, whereby starch phosphates are obtained that form gels in water or are soluble homogeneously.

8. The method according to any one of claims 6 or 7, **characterized in that** the time of the reaction is between 60 and 180 minutes.

9. The method according to any one of claims 6 to 8, **characterized in that** the starting starch is mixed with water prior to the reaction, and the amounts of urea and phosphorylating agent used are subsequently added under constant stirring, and the pasty mixture is then heated for removing the water and dried.

10. The method according to claim 9, **characterized in that** drying is carried out under vacuum.

11. The method according to any one of claims 9 or 10, **characterized in that** drying is carried out at a temperature of up to 90 °C.

12. The method according to any one of claims 6 to 11, **characterized in that** a vacuum of up to 6,7 kPa is applied.

13. The use of starch phosphates according to any one of the preceding claims as superabsorber.

14. The use of starch phosphates according to any one of the preceding claims as a component for adhesives or as a viscosity-regulating agent for aqueous systems.

15. The use of starch phosphates according to any one of the preceding claims as an additive for water for extinguishing fire.

**Revendications**

1. Phosphates d'amidon, obtenus par transformation d'amidon ou de matières contenant de l'amidon à l'aide d'un agent de phosphorylation et d'urée, **caractérisés en ce que** les unités d'anhydroglucose sont substituées par des groupes des esters de phosphate et des groupes des carbamides et le degré de substitution moyen DS des groupes des carbamides et des groupes des esters de phosphate se trouve respectivement dans un domaine compris entre 0,1 et 1.

2. Phosphates d'amidon selon la revendication 1, **caractérisés en ce que** les amidons de base sont de l'amylopectine pure ou de l'amylose pure ou leurs mélanges natifs ou des amidons de céréales, de pomme de terre ou de pois ainsi que des amidons formant une solution de faible viscosité ou des amidons solubles dans l'eau froide.

3. Phosphates d'amidon selon l'une quelconque des revendications 1 ou 2, **caractérisés en ce que** l'agent de phosphorylation est de l'acide phosphorique et/ou du phosphate d'ammonium et/ou du phosphate de potassium et/ou du phosphate de sodium.

4. Phosphates d'amidon selon l'une quelconque des revendications 1 à 3, **caractérisés en ce que** l'agent de carbamidation est de l'urée.

5. Phosphates d'amidon selon l'une quelconque des revendications 1 à 4, **caractérisés en ce que** les rapports molaires des unité d'anhydroglucose de l'amidon de base : phosphore de l'agent de phosphorylation : urée sont de 1 : 0,1 à 1,5 : 0,3 à 4.

6. Procédé de fabrication de phosphates d'amidon selon l'une quelconque des revendications 1 à 5 par transformation d'amidon ou de matières de base contenant de l'amidon avec un agent de phosphorylation et par ajout d'urée, **caractérisé en ce que** les substances de base sont utilisées dans un rapport molaire unités d'anhydroglucose de l'amidon : phosphore de l'agent de phosphorylation : urée de 1 : 0,1 à 1,5 : 0,3 à 4, la transformation est réalisée sous vide d'air à une pression de ≤ 13,3 kPa et des températures réactionnelles comprises entre 90 °C et 140 °C, les unités d'anhydroglucose de l'amidon de base étant s ubstituées p endant l a transformation par des groupes des carbamides et des esters de phosphate jusqu'à obtention de degrés de substitution moyens DS compris respectivement entre 0,1 et 1.

7. Procédé selon la revendication 6, **caractérisé en ce que** les degrés de substitution (valeurs DS) de la carbamidation et de la phosphorylation sont ajustés en variant les quantités utilisées d'urée et/ou d'agent de phosphorylation et/ou des temps de réaction, ce qui permet d'obtenir des phosphates d'amidon qui se gélifient dans l'eau ou qui sont solubles de façon homogène.

8. Procédé selon l'une quelconque des revendications 6 ou 7, **caractérisé en ce que** le temps réactionnel s'étend de 60 min à 180 min.

9. Procédé selon l'une des revendications 6 à 8, **caractérisé en ce que** l'amidon de base est mélangé à de l'eau avant sa transformation et, pour finir, les quantités utilisées d'urée et d'agent de phosphorylation sont rajoutées au mélange sans cesser de remuer, le mélange obtenu sous forme de bouillie est chauffé et séché pour en éliminer l'eau.

10. Procédé selon la revendication 9, **caractérisé en ce que** le séchage est réalisé sous vide d'air.

11. Procédé selon l'une quelconque des revendications 9 ou 10, **caractérisé en ce que** le séchage est réalisé à des températures allant jusqu'à 90 °C.

12. Procédé selon l'une quelconque des revendications 6 à 11, **caractérisé en ce qu'**un vide d'air est appliqué avec une pression allant jusqu'à 6,7 kPa.

13. Utilisation de phosphates d'amidon selon l'une quelconque des revendications précédentes en superabsorbants.

14. Utilisation de phosphates d'amidon selon l'une quelconque des revendications précédentes en composants de colles ou en régulateurs de la viscosité pour systèmes aqueux.

15. Utilisation de phosphates d'amidon selon l'une quelconque des revendications précédentes en adjuvants pour l'eau d'extinction.